(19)

**Europäisches Patentamt**

**European Patent Office**

**Office européen des brevets**

(11) **EP 4 307 894 B1**

(12) **EUROPEAN PATENT SPECIFICATION**

(45) Date of publication and mention
of the grant of the patent:
**25.12.2024 Bulletin 2024/52**

(21) Application number: **22716076.9**

(22) Date of filing: **18.03.2022**

(51) International Patent Classification (IPC):
**A01N 43/40** (2006.01)    **A01N 25/00** (2006.01)
**A01N 25/04** (2006.01)    **A01N 25/30** (2006.01)
**A01P 3/00** (2006.01)    **A01P 5/00** (2006.01)

(52) Cooperative Patent Classification (CPC):
(C-Sets available)
**A01N 43/40; A01P 3/00; A01P 5/00**     (Cont.)

(86) International application number:
**PCT/EP2022/057154**

(87) International publication number:
**WO 2022/195077 (22.09.2022 Gazette 2022/38)**

(54) **CYCLOBUTRIFLURAM SUSPENSION CONCENTRATE COMPOSITION**

CYCLOBUTRIFLURAM-SUSPENSIONSKONZENTRAT-ZUSAMMENSETZUNG

COMPOSITION DE CONCENTRÉ DE SUSPENSION DE CYCLOBUTRIFLURAM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2021 EP 21163830
19.03.2021 EP 21163833
19.03.2021 EP 21163835**

(43) Date of publication of application:
**24.01.2024 Bulletin 2024/04**

(73) Proprietor: **Syngenta Crop Protection AG
4058 Basel (CH)**

(72) Inventors:
• **MEUNIER, Celine
4333 Münchwilen (CH)**
• **JANKER, Marion
4333 Münchwilen (CH)**
• **GARO, Kerstin
4333 Münchwilen (CH)**
• **SIEBOLD, Claudia
4333 Münchwilen (CH)**
• **SCHNEIDER, Sandra
4333 Münchwilen (CH)**
• **KIENTZ, Heloise
4333 Münchwilen (CH)**
• **BREMONT, Anne-Laure
4333 Münchwilen (CH)**
• **BIRCHER, Rene Rolf
4333 Münchwilen (CH)**

(74) Representative: **SYNGENTA IP
Rosentalstrasse 67
4058 Basel (CH)**

(56) References cited:
**EP-A1- 3 292 759**    **WO-A1-2013/143811**
**WO-A1-2015/003951**    **WO-A2-2009/123346**

• **ANON.: "Syngenta announces TYMIRIUM
technology brand", 7 May 2020 (2020-05-07),
pages 1 - 2, XP055828382, Retrieved from the
Internet
<URL:https://www.syngenta.com/en/company/
media/syngenta-news/year/2020/syngenta-anno
unces-tymirium-tm-technology-brand>
[retrieved on 20210728]**
• **NORIHARU UMETSU ET AL: "Development of
novel pesticides in the 21st century", JOURNAL
OF PESTICIDE SCIENCE, vol. 45, no. 2, 20 May
2020 (2020-05-20), TOKYO, JAPAN, pages 54 - 74,
XP055705077, ISSN: 1348-589X, DOI:
10.1584/jpestics.D20-201**

EP 4 307 894 B1

- **ANON.: "Technical bulletin: Tersperse 2500 Dispersant", 1 January 2016 (2016-01-01), pages 1 - 2, XP055828610, Retrieved from the Internet <URL:https://www.palmerholland.com/getmedia /efd84cc2-26c5-4ce1-bd6d-d324869f1835/MITM1 1015_1> [retrieved on 20210728]**
- **ANON.: "Toximul 8315", 1 June 2015 (2015-06-01), pages 1 - 2, XP055828546, Retrieved from the Internet <URL:https://www.stepan.com/content/dam/ste pan-dot-com/webdam/website-product-docume nts/product-bulletins/surfactants/TOXIMUL8315 .pdf> [retrieved on 20210728]**

(52) Cooperative Patent Classification (CPC): (Cont.)

C-Sets
**A01N 43/40, A01N 25/00, A01N 25/04, A01N 25/30**

## Description

### Technical field

The present invention relates to a new aqueous cyclobutrifluram suspension concentrate composition. Such compositions find use in agriculture to control pests harmful to commercial crops.

### Background

Cyclobutrifluram is a pesticidal active ingredient with activity against a wide variety of nematodes and fungis. The molecule cyclobutrifluram has been disclosed in WO2013/143811 and WO2015/003951 (both Syngenta). Cyclobutrifluram provides long-lasting protection against a broad spectrum of nematode pests and diseases across all major crops and geographies. Nematodes not only attack crops but also open a path to further fungal infection. Cyclobutrifluram offers excellent control of both nematodes and soil-borne diseases, especially *Fusarium species.* By protecting the root mass, cyclobutrifluram plays a critical part in enabling no-tillage and conservation-tillage practices.

Pesticides need to be formulated to be able to be applied by farmers. The environmentally most friendly pesticidal formulations are water-based formulations such suspension concentrates and suspo emulsions. Drawback of such formulations is that water-based formulations containing solid active ingredients may exhibit settling of the suspended or dispersed components over time. This settling can lead to the creation of hard packed sediment making it difficult to get the materials out of the container. In many cases, the pesticide solids may stay suspended in the formulated concentrate but upon dilution of these types of formulations, the suspended or dispersed solids will settle with time to the bottom of a container (a so-called tank mix). The rate of sedimentation depends on many factors such as particle size, particle concentration, viscosity of the suspending medium and the specific gravity difference between the particles and the suspending medium. Once settled, the sediments may become hard packed in nature, making redispersion or resuspension extremely difficult. The creation of hard packed sediment can occur when the tanks are not agitated. Interruptions in the spray schedule frequently occur due to normal breaks, for example overnight, taken by the applicator, weather changes, mechanical malfunction or unforeseen events which result in non-agitation of the spray tank.

Other issues with water-based formulations are for example milling problems of the active ingredients during manufacture, long term cold and hot storage stability etc.

Seed treatments are the biological, physical and chemical agents and techniques applied to seeds to provide protection and improve the establishment of healthy crops. Applying the products directly to the seed is substantially more efficient and effective than broadcast crop protection methods. By applying only very small quantities of plant protection products directly to the seed itself, prior to the sowing, seed treatments protect the seed during germination and protect the plant itself during growth. With much lower chemical intensity per hectare, it is more environmentally friendly than spraying crops in the field. However, to treat seeds with the crop protection active ingredients, very high strength concentrated formulations are needed. The environmentally most friendly type of formulations for seed treatments are water-based formulations such as suspension concentrate formulations. However, such suspension concentrates typically suffer from drawbacks such stability issues, e.g. sedimentation of the active ingredient, milling problems of the active ingredients during manufacture, long term cold and hot storage stability etc.

It is the purpose of the invention to provide a stable and highly concentrated suspension of the newly developed pesticidal active ingredient cyclobutrifluram, which possesses good and stable viscosity and particle size properties.

### Description of the invention

Cyclobutrifluram is being developed as a nematicide and has also shown good activity against soil-borne diseases. It is the purpose of this invention to provide an aqueous suspension concentrate (hereinafter also referred as "SC") formulation with a high loading of cyclobutrifluram which may be employed in seed treatment as well as crop protection applications such as foliar, drench and in-furrow applications.

"Suspension concentrate" is also known as flowable concentration, and it is a stable suspension of active ingredient(s) with water as the fluid, intended for dilution with water before use. A "flowable suspension" (herein after also referred to as "FS") is a table flowable suspension for application to the seed, either directly or after dilution. For avoidance of doubt, reference to "suspension concentrate" in the present application includes "flowable suspension".

In a first aspect, as embodiment 1, the invention provides an aqueous suspension concentrate composition comprising

(i) cyclobutrifluram as active ingredient;
(ii) 1 to 30 grams / liter of a sulfosuccinate wetting agent;
(iii) 5 to 50 grams / liter of a butyl polyalkylene oxide block copolymer; and

(iv) 2.5 to 35 grams / liter of sodium lignosulfonate.

Preferably, the SC composition comprises 5 to 25 grams / liter of a sulfosuccinate wetting agent. More preferably, the SC composition comprises 5 to 15 grams / liter of a sulfosuccinate wetting agent. Most preferably, the SC composition comprises 8 to 12 grams / liter of a sulfosuccinate wetting agent.

The person skilled in the art is aware of sulfosuccinate wetting agents as defined in embodiment 1. An example of a sulfosuccinate wetting agent is Sodium-dioctyl-sulfosuccinate. Examples of such wetting agents are commercialized under the tradenames AEROSOL®, AGENT®, AGNIQUE®, CELANOL®, CELESTOL®, DISPONIL®, EMULSOGEN®, ENZU RPON®, GEROPON®, LANKROPOL®, LIOVAC®, MONAWET@, MULTIWET®, NEKAL®, NEWKALG EN®, OCTOWET®, REWOPOL®, STEPWET®, TRITON®, and UMECTANTE®.

Preferably, the SC composition comprises 9 to 41 grams / liter of a butyl polyalkylene oxide block copolymer. More preferably, the SC composition comprises 10 to 30 grams / liter of a butyl polyalkylene oxide block copolymer.

Preferably, the SC composition comprises 7 to 25 gram / liter of a sodium lignosulfonate. More preferably, the SC composition comprises 10 to 18 gram / liter of a sodium lignosulfonate.

Suitable sodium lignosulfonates as used herein are known to a person skilled in the art, for example under the brand names BANIREX®, BORRESPERSE®, DIWATEX®, GREENSPERSE®, KRAFTSPERSE®, LIGNOSITE®, MARACARB®, MARASPERSE®, NORLIG®, ORZANS®, POLYFON®, REAX®, REVEAL®, SANEKISPO, TENSIOFIXO, ULTRAZINEO, URZANS®, VANIREX®, VANISPERSEO, VIXIL®, and VIXILEX®,

As embodiment 2, the invention provides an aqueous suspension concentrate composition according to embodiment 1, further comprising

(v) 1 to 55 grams / liter of an acrylic graft copolymer.

As demonstrated in the Expereimental Examples section below, the addition of an acrylic graft copolymer helps reduce wetsieves residues. Furthermore, the resulting composition is easier to handle.

Preferably, the SC composition comprises 5 to 47 gram / liter of an acrylic graft copolymer. More preferably, the SC composition comprises 5 to 30 gram / liter of an acrylic graft copolymer. Typical acrylic graft copolymers as used herein are known to a person skilled in the art, for example the non-ionic surfactants sold under the commercial brand names ATLOX®, EMULSON®, HYPERMER®, STEP-FLOW®, and TERSPERSE®.

As embodiment 3, there is provided an aqueous suspension concentrate composition according to any one of embodiments 1 to 2, wherein the aqueous suspension concentrate composition comprises 100 to 600 gram / liter of cyclobutrifluram.

As embodiment 4, there is provided an aqueous suspension concentrate composition according to any one of embodiments 1 to 3, wherein the aqueous suspension concentrate composition comprises 200 to 500 gram / liter of cyclobutrifluram. Preferably, the SC composition comprises 450 to 500 gram / liter of cyclobutrifluram.

As embodiment 5, there is provided an aqueous suspension concentrate composition according to any one of embodiments 1 to 4, wherein the butyl polyalkylene oxide block copolymer is a butyl alcohol polyoxyethylene-polyoxypropylene block copolymer, also known as copolymer butanol PO (propylene oxide)/EO (ethylene oxide).

Butyl polyalkylene oxide block copolymer as used herein are non-ionic surfactants known to a person skilled in the art. They are sold under commercial brand names including AGUARD®, AGITAN®, AGNIQUE®, ANTAROX®, ATLAS®, BREOX®, CONTEX®, EMKAROX®, EMULGEN®, EMULSOGEN®, EMULSON®, MACOL®, NEWPOL®, PLURACOL®, POLYGLYKOL®, PPG-BUTETH®, SURFONIC®, SYNALOX®, SYNERGEN®, TERGITOL®, TERMUL®, TOXIMUL®, UCON®, ULTRARIC®, and WITCONOL®.

As embodiment 6, there is provided the aqueous suspension concentrate composition according to any one of embodiments 3 to 5, wherein the acrylic graft copolymer comprises a methyacrylic acid backbone.

As embodiment 7, there is provided the aqueous suspension concentrate composition according to any one of embodiments 1 to 6, further comprising from 5 to 120 gram / liter of a pigment. Preferably, the SC composition comprises 10 to 100 gram / liter of a pigment. Most preferably, the SC composition comprises 20 to 60 gram / liter of a pigment.

The term "pigment" as used herein is a dye suitable to color the seeds when carrying out seed treatment. This can be really important as it signifies to the operator which seeds have already been treated and thus avoid unnecessary exposure to the active ingredient. Furthermore, a pigment also serves to discourage birds from consuming treated seed. Typical pigments to be used in the current suspension concentrate composition are salts of monoazo dyes, for example calcium salts of monoazo dyes. Preferably, the pigment used in the present invention is red. An example is Pigment Red 48 (4-[2-(5-Chloro-4-methyl-2-sulfophenyl)diazenyl]-3-hydroxy-2-naphthalenecarboxylic acid). Further examples of suitable pigments and dyes include C.I.Pigment Red 48, (2-Naphthalenecarboxylic acid, 4-[(5-chloro-4-methyl-2-sulfophenyl)azo]-3-hydroxy-, calcium salt, di-sodium salt, magnesium salt, strontium salt), C.I.Pigment red 53 (Benzenesulfonic acid, 5-chloro-2-[2-(2-hydroxy-1-naphthalenyl)diazenyl]-4-methyl-, barium salt), C.I.Pigment red 57 (calcium;4-[4-methyl-2-sulfophenyl)diazenyl]-3-oxidonaphthalene-2-carboxylate), C.I.Pigment red 112 (3-Hydroxy-N-(2-methylphenyl)-4-[(2,4,5-trichlorophenyl)diazenyl]naphthalene-2-carboxamide), C.I.Pigment red 254 (1,4-bis(4-chlorophenyl)-2,5-dihydropyrrolo[3,4-c]pyrrole-3,6-dione), and/or Acid red 18 / Food red 7 (trisodium;7-hydroxy-8-[(4-sulfonatonaphthalen-1-yl)diazenyl]naphthalene-1,3-disulfonate).

As embodiment 8, there is provided the aqueous suspension concentrate composition according to embodiments 1 to 7, comprising:

(i) 150 to 550 gram / liter cyclobutrifluram as active ingredient;
(ii) 5 to 15 gram / liter of a sulfosuccinate wetting agent;
(iii) 5 to 35 gram / liter of a butyl polyalkylene oxide block copolymer;
(iv) 5 to 20 gram / liter of a sodium lignosulfonate; and
(v) 2 to 35 gram / liter of an acrylic graft copolymer.

In a more preferred embodiment, there is provided an aqueous SC composition comprising:

(i) 200 to 500 gram / liter cyclobutrifluram as active ingredient;
(ii) 10 gram / liter of a sulfosuccinate wetting agent;
(iii) 10 to 30 gram / liter of a butyl polyalkylene oxide block copolymer;
(iv) 10 to 18 gram / liter of a sodium lignosulfonate; and
(v) 5 to 30 gram / liter of an acrylic graft copolymer.

As embodiment 9, there is provided the aqueous suspension concentrate composition according to any one of embodiments 1 to 8, further comprising one or more additional ingredients selected from an anti-freeze agent, an anti-foam agent, a thickening agent, a biocide (preservative), a buffering agent, and/or a stabilizer.

Examples of a suitable antifreeze include 1,2-Propylenglykol, and/or propan-1,2,3-triol. Examples of an anti-foam agent include Polydimethylsiloxane antifoam compounds and/or emulsion. Examples of a thickening agent include mineral stabilizers like clays such as montmorillonites and attapulgites, and natural polymers such as Xantham gums. Examples of a suitable preservative include 1,2-benzisothiazol-3-one, 5-Chloro-2-methyl-4-isothiazolin-3-one, 2-methyl-4-isothiazolin-3-one, and/or 2-bromo-2-nitropropan-1,3-diol.

As embodiment 10, there is provided the aqueous suspension concentrate composition according to any one of embodiments 1 to 9, further comprising one or more adjuvants or carriers.

In some embodiments, the SC composition may further comprise

(vi) 75 to 125 gram / liter of an unmodified natural oil; and
(vii) 65 to 110 gram / liter of ethoxylated fatty alcohol.

Preferably, the unmodified natural oil is a vegetable oil such as rape seed oil, sunflower oil, castor oil, and/or soybean oil. Preferably, the ethoxylated fatty alcohol is an oleyl alcohol polyglycol ether with 5-20 ethylene oxide. More preferably, the the ethoxylated fatty alcohol is Polyglycolether-EO.

In a second aspect, as embodiment 11, there is provided a method of reducing or preventing nematicidal or fungicidal damage in a plant comprising applying a composition according to any one of embodiments 1 to 10 to the seed of a plant.

As embodiment 12, there is provided the method according to embodiment 11, wherein the plant is selected from barley, brassica head and stem vegetables, bean, carrot, chickpea, corn, cotton, cowpea, curcurbits, dry beans, field peas, garden beans, garlic, lentils, lettuce, millet, oat, onion, peanut, peas, potato, rice, rye, sorghum, soybean, sugarbeet, sunflower, triticale and wheat. Particularly, the plant is selected from corn, cotton and soybean. Preferably, the plant is selected from corn, cotton and soybean.

In a third aspect, as embodiment 13, there is provided a method of reducing or preventing nematicidal or fungicidal damage in a plant comprising applying a composition according to any one of embodiments 1 to 10 to the plant or to the locus thereof.

As embodiment 14, there is provided the method according to embodiment 13, wherein the plant is selected from arracacha, banana, beans, black pepper, brassica head and stem vegetables, broccoli, cabbage, carrot, cauliflower, celery, Chinese cabbage, citrus fruits, coffee, cotton, cucumber, melon, watermelon, oriental melon, zucchini, dragon fruit, eggplant, fruiting vegetables, garlic, ginger, ginseng, grapes, hot peppers, kale, lettuce, spinach, mustard greens, nuts, okra, onion, oriental raddish, ornamentals, papaya, peanut, peppers, pineapple, pome fruits, potato, soybean, stone fruits, strawberry, sugarbeet, sugarcane, sweet potato, tobacco, tomato, tree nuts and turf. Preferably, the patent is selected from banana, carrot, cucumber, zucchini, melon, watermelon, eggplant, grapes, ornamentals, peppers, potato, lettuce, sweet potato, tomato and turf.

The method according to embodiments 11 to 14, wherein the composition according to any one of embodiments 1 to 10 comprises a further pesticidally active ingredient.

The term "compositions of the present invention", "compositions of the current inventions" or "inventive compositions" as used herein mean compositions according to any one of embodiments 1 to 10.

The following advantages of the aqueous suspension concentrate composition of the present invention have been surprisingly found:

(a) Good and stable viscosity properties thus minimal thickening providing ease of manufacturing and application;
(b) Good and stable particle size properties thus minimal crystal growth;
(c) Minimal crystal growth over time;
(d) Good milling properties;
(e) Prolonged storage stability, i.e. no occurrence of physical changes in the composition such as cloudiness, precipitation or flake building even over prolonged periods;
(f) full suspension of the concentrate when diluted in water;
(g) excellent physical stability of the active ingredient cyclobutrifluram;
(h) reduced dust-off from seeds, thus improving safety when handling the treated seeds;
(i) excellent seed flow of treated seeds, i.e. improved ease of application.

In a further aspect, the current invention provides a method for controlling a pest comprising diluting a composition according to any one of embodiments 1 to 10 with a suitable liquid carrier, in particular an aqueous liquid carrier, such as water or liquid fertilizer, and then applying the dilute composition to the plant propagation material, plant or locus thereof. In another embodiment, the dilute composition is applied by in furrow or T-band type application. The composition of the present invention may also be combined in a continuous flow apparatus with water in spray application equipment, such that no holding tank is required for the diluted product.

Other active ingredients such as herbicides, plant growth regulators, algicides, fungicides, bactericides, viricides, insecticides, acaricides, nematicides or molluscicides may be present in the soluble concentrate compositions of the present invention or may be added as a tank-mix partner to the dilute spray compositions prepared therefrom.

In addition, the soluble concentrate compositions of the invention may further comprise other additives. Such additives include safeners, thickeners, flow enhancers, wetting agents, antifoaming agents, biocides, buffers, chelating agents, lubricants, fillers, drift control agents, deposition enhancers, evaporation retardants, frost protecting agents, insect attracting odor agents, UV protecting agents, fragrances, and the like. These additives are known to a person skilled in the art.

The following examples illustrate further the invention but are not intended to limit its scope.

**Experimental Examples**

Example compositions according to the invention together with a broad range of comparative compositions, were prepared with the components as set out in Tables 1, 3, 5 and 7 below.

*Methodology*

The prepared compositions were tested for a wide range of properties as set out below, with the results presented in Tables 2, 4, 6 and 8.

Storage

Samples of different compositions in accordance with the present invention and comparative compositions are stored for two weeks at 54 °C in 30mL vials. The tests below are performed before and after storage to determine shelf life and stability.

Viscosity

Viscosity was measured directly in vials containing composition with Brookfield® Viscosimeter. Measurement was performed with Spindle 63, at 30rpm, value was taken after 1 minute.

Viscosity has been measured on newly prepared samples of composition at room temperature and after accelerated-aged storage (2weeks@54°C).

*Delta(viscosity)* [mPa.s] and *viscosity drift* [%] are both calculated values to quantify viscosity variations and detect thickening phenomena over the storage time.

Delta(Viscosity) [mPa.s] is obtained according to the following formula:

$$Delta(Viscosity) = viscosity_{(2weeks@54°C)} - viscosity_{(initial)}$$

Drift viscosity [%] is obtained according to the following formula:

$$Drift\ viscosity = 100*(viscosity_{(2weeks@54°C)} - viscosity_{(initial)})/viscosity_{(initial)}$$

*Or*

$$Viscosity\ drift = 100 * Delta(Viscosity) / viscosity_{(initial)}$$

Compositions in accordance with the present invention exhibit the below features:

- viscosity in the range of 400 - 800 mPa.s
- delta viscosity minimized below 250 mPa.s
- Viscosity drift minimized below 60%

Particle Size Distribution (PSD)

Particle size distribution was measured on Cilas 1064 Laser Diffraction Particle Size Analyzer. Droplets of sample composition were dispersed until getting about 15-20% obscuration. Ultrasound was applied before and during measurement (60 seconds each).

$D_v(50)$, $D_v(90)$ and $D_v(97)$ are percentiles values. These are statistical parameters that can be read from the cumulative size distribution. $D_v(50)$ (also known as the median), $D_v(90)$ and $D_v(97)$ respectively indicate the size below 50%, 90% and 97% of all particles are found.

Delta ($D_v(x)$, where x =50 or 90 or 97) and $D_v(x)$ drift are both calculated values to quantify particle size variation and detect particle growth over the storage time.

Delta($D_v(x)$) [um] is obtained according to the following formula:

$$Delta(D_v(x) = D_v(x)_{(2weeks@54°C)} - D_v(x)_{(initial)}$$

$D_v(x)$ drift [%] is obtained according to the following formula:

$$D_v(x)\ drift = 100 * (D_v(x)_{(2weeks@54°C)} - D_v(x)_{(initial)})/ D_v(x)_{(initial)}$$

or

$$D_v(x)\ drift = 100 * Delta(D_v(x) / D_v(x)_{(initial)}$$

Compositions in accordance with the present invention exhibit the below features:

- Dv(50) between 1.0 and 2.5 um.
- Dv(90) below 10um.
- Dv(97) below 15um.
- Delta($D_v(x)$) minimized, respectively for d50, d90/d97, below 60% and 95%
- Dv(x) drift minimized, respectively for d50 and d90/d97, below 0.5$\mu$m and 2$\mu$m.

Wetsieve Residue - 15um and 45um

10 g of composition was poured into 100 mL of water and was stirred for up to 30 seconds until obtaining a homogeneous suspension and the resulting suspension was then poured over a 15 $\mu$m or 45 um fine mesh sieve. The sieve was rinsed for up to 1 minute under tap water. The residue on the sieve was collected, dried and weighed. The result is presented as a percentage against the initial 10 g.

EP 4 307 894 B1

Compositions in accordance with the present invention exhibit the below features:

- Wetsieve residues to be minimized, in particular <0.2% by 45um and <0,1% by 15um.

Microscopy

One droplet of distilled water is dropped-off on a glass slide, then a droplet of formulation is mixed and diluted into the water thanks to a rod. Once homongeneously mixed, cover the solution with a glass strip and put under an optical microscope LEICA. Particle size and shape are observed under different objectives, up to magnification x40. The criterion used in the present invention is a visual and qualitative one to determine the presence or absence of crystals.
Compositions in accordance with the present invention exhibit the below features:

- No or minimal crystal growth observed.

Tables 1.1 and 1.2: Compositions of suspension concentrate formulation according to the present invention. All components in Tables 1.1 and 1.2 are in gram / liter.
All compositions in Tables 1.1 and 1.2 contain the same amount of cyclobutrifluram, and contain the same total amount of components (ii), (iii), (iv) and (v). Furthermore, all compositions in Tables 1.1 and 1.2 contain the same amount of the same antifreeze, antifoam, preservative, thickener, and water.

Table 1.1

| Component | 1 | 2 | 3 | 4 | 5 | 6 |
|---|---|---|---|---|---|---|
| (i) cyclobutrifluram | 500 | 500 | 500 | 500 | 500 | 500 |
| (ii) Sodium-dioctyl-sulfosuccinate | 5 | 15 | 15 | 8.3 | 10 | 15 |
| (iii) Copolymer Butanol PO (propylene oxide)/EO (ethylene oxide) | 32.5 | 15 | 23.3 | 34.2 | 15 | 37.5 |
| (iv) Lignosulfonic acid, sodium salt | 7.5 | 22.5 | 22.5 | 22.5 | 20 | 12.5 |
| (v) Solution of an acrylic graft copolymer | 30 | 22.5 | 14.2 | 10 | 30 | 10 |
| Antifreeze | 50 | 50 | 50 | 50 | 50 | 50 |
| Antifoam | 2 | 2 | 2 | 2 | 2 | 2 |
| Preservative | 2.7 | 2.7 | 2.7 | 2.7 | 2.7 | 2.7 |
| Thickener | 11.2 | 11.2 | 11.2 | 11.2 | 11.2 | 11.2 |
| Water | rest | rest | rest | rest | rest | rest |
| **TOTAL** | 1 liter | 1 liter | 1 liter | 1 liter | 1 liter | 1 liter |

Table 1.2

| Component | 7 | 8 | 9 | 10 | 11 | 12 |
|---|---|---|---|---|---|---|
| (i) cyclobutrifluram | 500 | 500 | 500 | 500 | 500 | 500 |
| (ii) Sodium-dioctyl-sulfosuccinate | 5 | 18.75 | 21.9 | 9.4 | 25 | 10 |
| (iii) Copolymer Butanol PO (propylene oxide)/EO (ethylene oxide) | 40.8 | 18.75 | 9.4 | 9.4 | 25 | 30 |
| (iv) Lignosulfonic acid, sodium salt | 7.5 | 18.75 | 21.9 | 9.4 | 25 | 15 |
| (v) Solution of an acrylic graft copolymer | 21.7 | 18.75 | 21.9 | 46.9 | 0 | 20 |
| Antifreeze | 50 | 50 | 50 | 50 | 50 | 50 |
| Antifoam | 2 | 2 | 2 | 2 | 2 | 2 |
| Preservative | 2.7 | 2.7 | 2.7 | 2.7 | 2.7 | 2.7 |

(continued)

| Component | 7 | 8 | 9 | 10 | 11 | 12 |
|---|---|---|---|---|---|---|
| Thickener | 11.2 | 11.2 | 11.2 | 11.2 | 11.2 | 11.2 |
| Water | rest | rest | rest | rest | rest | rest |
| **TOTAL** | 1 liter | 1 liter | 1 liter | 1 liter | 1 liter | 1 liter |

Table 2.1: Test results of compositions in Table 1.1

| Test | 1 | 2 | 3 | 4 | 5 | 6 |
|---|---|---|---|---|---|---|
| Viscosity initial (mPa.s) | 464 | 560 | 476 | 472 | 420 | 420 |
| Viscosity 2weeks@54°C (mPa.s) | 656 | 692 | 644 | 616 | 656 | 520 |
| Viscosity drift (%) | 41% | 24% | 35% | 31% | 56% | 24% |
| Delta Viscosity (mPa.s) | 192 | 132 | 168 | 144 | 236 | 100 |
| D50 initial ($\mu$m) | 1.69 | 1.07 | 1.15 | 1.19 | 1.02 | 1.25 |
| D50 2weeks@54°C ($\mu$m) | 2.09 | 1.38 | 1.47 | 1.6 | 1.42 | 1.65 |
| drift D50 (%) | 24% | 29% | 28% | 34% | 39% | 32% |
| delta D50 ($\mu$m) | 0.4 | 0.31 | 0.32 | 0.41 | 0.4 | 0.4 |
| D90 initial ($\mu$m) | 3.99 | 2.32 | 2.48 | 2.59 | 2.23 | 2.75 |
| D90 2weeks @54°C ($\mu$m) | 5.52 | 3.2 | 3.63 | 4.19 | 3.58 | 4.3 |
| Drift D90 (%) | 38% | 38% | 46% | 62% | 61% | 56% |
| Delta D90 ($\mu$m) | 1.53 | 0.88 | 1.15 | 1.6 | 1.35 | 1.55 |
| Wetsieve 15$\mu$m 2weeks @54°C (%) | 1.26% | 0.18% | 0.23% | 0.36% | 0.19% | 0.27% |
| Crystal growth via microscopy | no | no | no | minimal | no | minimal |
| Other observations | | | | | | |

Table 2.2: Test results of compositions in Table 1.2

| Test | 7 | 8 | 9 | 10 | 11 | 12 |
|---|---|---|---|---|---|---|
| Viscosity initial (mPa.s) | 424 | 608 | 416 | 360 | 440 | 375 |
| Viscosity 2weeks@54°C (mPa.s) | 552 | 652 | 592 | 540 | 348 | 516 |
| Viscosity drift (%) | 30% | 7% | 42% | 50% | -21% | 38% |
| Delta Viscosity (mPa.s) | 128 | 44 | 176 | 180 | -92 | 141 |
| D50 initial ($\mu$m) | 1.64 | 1.18 | 1.22 | 0.94 | 1.44 | 1.09 |
| D50 2weeks@54°C ($\mu$m) | 2.05 | 1.38 | 1.38 | 1.45 | 1.67 | 1.57 |
| drift D50 (%) | 25% | 17% | 13% | 54% | 16% | 44% |
| delta D50 ($\mu$m) | 0.41 | 0.2 | 0.16 | 0.51 | 0.23 | 0.48 |
| D90 initial ($\mu$m) | 3.84 | 2.56 | 2.67 | 2.02 | 3.25 | 2.40 |
| D90 2weeks @54°C ($\mu$m) | 5.27 | 3.17 | 3.06 | 3.86 | 3.86 | 4.23 |
| Drift D90 (%) | 37% | 24% | 15% | 91% | 19% | 76% |
| Delta D90 ($\mu$m) | 1.43 | 0.61 | 0.39 | 1.84 | 0.61 | 1.82 |
| Wetsieve 15$\mu$m 2weeks @54°C (%) | 0.64% | 0.19% | 0.24% | 0.11% | 0.31% | 0.19% |

(continued)

| Test | 7 | 8 | 9 | 10 | 11 | 12 |
|---|---|---|---|---|---|---|
| Crystal growth via microscopy | minimal | no | no | no | no | no |
| Other observations | | | | | higher residues | |

Conclusions:

Compositions 1- 12 demonstrate that surprisingly SC compositions comprising the below components exhibit all the desirable technical properties required for a good, stable and easy-to-handle SC formulation comprising cyclobutrifluram.

    (i) cyclobutrifluram as active ingredient;
    (ii) 1 to 30 gram / liter of a sulfosuccinate wetting agent;
    (iii) 5 to 50 gram / liter of a butyl polyalkylene oxide block copolymer; and
    (iv) 2.5 to 35 gram / liter of a sodium lignosulfonate.

Composition 11 comprises a butyl polyalkylene oxide block copolymer, a sulfosuccinate wetting agent, and a sodium lignosulfonate, but not an acrylic graft copolymer. Test for composition 11 shows that surprisingly higher wetsieve residues but is still within acceptable range, and the resulting composition was more difficult to handle. This demonstrates that addition of an acrylic graft copolymer helps minimize thickening and improve the stability of the composition, and the resulting composition is easier to handle.

Tables 3.1 and 3.2: Comparative compositions of a suspension concentrate formulation. All components in Tables 3.1 and 3.2 are in gram / liter.

All comparative compositions in Tables 3.1 and 3.2 contain the same amount of cyclobutrifluram, and contain the same total amount of components (ii), (iii), (iv) and (v) as those compositions in Tables 1.1 and 1.2. Furthermore, all comparative compositions in Tables 3.1 and 3.2 contain the same amount of the same antifreeze, antifoam, preservative, thickener, and water as those compositions in Tables 1.1 and 1.2.

Table 3.1

| Component | 13 | 14 | 15 | 16 | 17 | 18 | 19 |
|---|---|---|---|---|---|---|---|
| (i) cyclobutrifluram | 500 | 500 | 500 | 500 | 500 | 500 | 500 |
| (ii) Sodium-dioctyl-sulfosuccinate | 10 | 0 | 10 | 75 | 0 | 0 | 0 |
| (iii) Copolymer Butanol PO (propylene oxide)/EO (ethylene oxide) | 30 | 30 | 0 | 0 | 0 | 75 | 0 |
| (iv) Lignosulfonic acid, sodium salt | 0 | 0 | 0 | 0 | 75 | 0 | 0 |
| (v) Solution of an acrylic graft copolymer | 20 | 20 | 20 | 0 | 0 | 0 | 75 |
| Antifreeze | 50 | 50 | 50 | 50 | 50 | 50 | 50 |
| Antifoam | 2 | 2 | 2 | 2 | 2 | 2 | 2 |
| Preservative | 2.7 | 2.7 | 2.7 | 2.7 | 2.7 | 2.7 | 2.7 |
| Thickener | 11.2 | 11.2 | 11.2 | 11.2 | 11.2 | 11.2 | 11.2 |
| Water | rest | rest | rest | rest | rest | rest | rest |
| TOTAL | 1 liter | 1 liter | 1 liter | 1 liter | 1 liter | 1 liter | 1 liter |

Table 3.2

| Component | 20 | 21 | 22 | 23 | 24 | 25 |
|---|---|---|---|---|---|---|
| (i) cyclobutrifluram | 500 | 500 | 500 | 500 | 500 | 500 |
| (ii) Sodium-dioctyl-sulfosuccinate | 25 | 25 | 0 | 25 | 0 | 25 |

(continued)

| Component | 20 | 21 | 22 | 23 | 24 | 25 |
|---|---|---|---|---|---|---|
| (iii) Copolymer Butanol PO (propylene oxide)/EO (ethylene oxide) | 25 | 0 | 25 | 0 | 46.9 | 50 |
| (iv) Lignosulfonic acid, sodium salt | 0 | 25 | 25 | 50 | 0 | 0 |
| (v) Solution of an acrylic graft copolymer | 25 | 23 | 25 | 0 | 28.1 | 0 |
| Antifreeze | 50 | 50 | 50 | 50 | 50 | 50 |
| Antifoam | 2 | 2 | 2 | 2 | 2 | 2 |
| Preservative | 2.7 | 2.7 | 2.7 | 2.7 | 2.7 | 2.7 |
| Thickener | 11.2 | 11.2 | 11.2 | 11.2 | 11.2 | 11.2 |
| Water | rest | rest | rest | rest | rest | rest |
| **TOTAL** | 1 liter | 1 liter | 1 liter | 1 liter | 1 liter | 1 liter |

Table 4.1: Test results of comparative compositions in Table 3.1.

| Test | 13 | 14 | 15 | 16 | 17 | 18 | 19 |
|---|---|---|---|---|---|---|---|
| Visco initial | 304 | 208 | 412 | paste | 532 | 584 | 844 |
| visco after 2 weeks 54°C | 236 | 208 | 1848 | paste | 1372 | 668 | >3000 |
| Visco drift (%) | -22% | 0% | 349% | | 158% | 14% | > 255% |
| Delta Viscosity | -68 | 0 | 1436 | | 840 | 84 | |
| D50 initial | 1.41 | 1.57 | 1.35 | 1.71 | 1.48 | 2.04 | 0.95 |
| D50 2weeks@54°C | 2.23 | 2.09 | 2.02 | | 1.47 | 2.72 | 1.52 |
| drift D50 | 58% | 33% | 50% | | -1% | 33% | 60% |
| delta D50 | 0.82 | 0.52 | 0.67 | | -0.01 | 0.68 | 0.57 |
| D90 initial | 3.32 | 3.72 | 2.94 | 3.97 | 3.21 | 5.44 | 2.25 |
| D90 2weeks@54°C | 8.82 | 5.88 | 6.41 | | 3.34 | 9.24 | 3.66 |
| Drift D90 | 166% | 58% | 118% | | 4% | 70% | 63% |
| Delta D90 | | | | | | | |
| Wetsieve 15um 2weeks@54°C | | | | | | | |
| Observations | | | | | | | |

Table 4.2: Test results of comparative compositions in Table 3.2

| Test | 20 | 21 | 22 | 23 | 24 | 25 |
|---|---|---|---|---|---|---|
| Visco initial | 524 | 588 | 432 | 508 | 476 | 408 |
| visco after 2 weeks 54°C | 692 | >3000 | 576 | >3000 | 588 | 492 |
| Visco drift (%) | 32% | > 410% | 33% | > 491% | 24% | 21% |
| Delta Viscosity | 168 | | 144 | | 112 | 84 |
| D50 initial | 1.49 | 1.51 | 1.59 | 1.66 | 1.75 | 1.62 |
| D50 2weeks@54°C | 2.35 | 1.55 | 1.88 | 1.68 | 2.32 | 2.49 |
| drift D50 | 58% | 3% | 18% | 1% | 33% | 54% |

(continued)

| Test | 20 | 21 | 22 | 23 | 24 | 25 |
|---|---|---|---|---|---|---|
| delta D50 | 0.86 | 0.04 | 0.29 | 0.02 | 0.57 | 0.87 |
| D90 initial | 3.42 | 3.37 | 3.73 | 3.87 | 4.23 | 3.81 |
| D90 2weeks@54°C | 8.88 | 3.46 | 4.22 | 3.86 | 6.28 | 9.83 |
| Drift D90 | 160% | 3% | 13% | 0% | 48% | 158% |
| Delta D90 | 5.46 | 0.09 | 0.49 | -0.01 | 2.05 | 6.02 |
| Wetsieve 15um 2weeks@54°C | 0.24% | 0.63% | 1.08% | 1.10% | 0.85% | 0.30% |
| Observations | crystal growth | huge thickening | high residues | huge thickening | crystal growth | crystal growth |

Conclusions:

Compositions 16-19 comprise one of a sulfosuccinate wetting agent, a butyl polyalkylene oxide block copolymer, a sodium lignosulfonate, and an acrylic graft copolymer, respectively. None of these compositions are acceptable.

Composition 22 comprises a butyl polyalkylene oxide block copolymer, a sodium lignosulfonate, and an acrylic graft copolymer, but not a sulfosuccinate wetting agent. Test results showed surprisingly unacceptably high level of wetsieve residues. This demonstrates that a sulfosuccinate wetting agent contributes to avoiding excessive level of wetsieve residues.

Composition 21 comprises a sulfosuccinate wetting agent, a sodium lignosulfonate, and an acrylic graft copolymer, but not a butyl polyalkylene oxide block copolymer. Test results showed surprisingly huge thickening after 2 weeks. This demonstrates that a butyl polyalkylene oxide block copolymer helps with reaching and maintaining a low viscosity.

Compositions of the present invention comporise 5 to 50 gram / liter, preferably 9 to 41 grams / liter, and more preferably 10 to 30 grams / liter of a butyl polyalkylene oxide block copolymer. This represents a compromise between stable PSD and stable viscosity, because it has been found that surprisingly low toximul level gives rise to a composition with stable PSD (no crystal growth) and high toximul level gives rise to a composition with stable visocity (no thickening). In particular, compositions 2, 5, 8 and 10 have demonstrated that low toximul confirms stable PSD (no needles on microscopy pictures, loe increase of PSD), and composition 7, 24 and 25 have demostrated that even if Toximul content is high, viscosity is not significantly impacted.

Compositions 13 and 20 comprise a sulfosuccinate wetting agent, a butyl polyalkylene oxide block copolymer, and an acrylic graft copolymer, but not a sodium lignosulfonate. Test results showed crytstal growth after 2 weeks. This demonstrates that a sodium lignosulfonate serves to minimize crystal growth.

Table 5: Further example compositions according to the present invention. All components in Table 5 are in gram / liter.

| Compositions in Table 5 comprises different amounts of cyclobutrifluram, different total amounts of components (ii), (iii), (iv) and (v), and different amounts of various other components. | | | |
|---|---|---|---|
| Component | 26 | 27 | 28 |
| (i) cyclobutrifluram | 450 | 500 | 200 |
| (ii) Sodium-dioctyl-sulfosuccinate | 10 | 10 | 10 |
| (iii) Copolymer Butanol PO (propylene oxide)/EO (ethylene oxide) | 10 | 30 | 30 |
| (iv) Lignosulfonic acid, sodium salt | 10 | 18 | 15 |
| (v) Solution of an acrylic graft copolymer | 30 | 5 | 20 |
| Antifreeze | 50 | 50 | 50 |
| Antifoam | 2 | 2 | 10.3 |
| Preservative | 3.2 | 2.7 | 2.7 |
| Thickener | 13 | 11.5 | 11.8 |

(continued)

Compositions in Table 5 comprises different amounts of cyclobutrifluram, different total amounts of components (ii), (iii), (iv) and (v), and different amounts of various other components.

| Component | 26 | 27 | 28 |
|---|---|---|---|
| Dye | 0 | 20 | 60 |
| (vi) Unmodified natural oil | 0 | 0 | 100 |
| (vii) Polyglycolether-EO | 0 | 0 | 88 |
| Water | rest | rest | rest |
| TOTAL | 1 liter | 1 liter | 1 liter |

Table 6: Test results of the compositions in Table 5.

| Test | 26 | 27 | 28 |
|---|---|---|---|
| Viscosity initial (mPa.s) | 574 | 553 | 576 |
| Viscosity after 2 weeks 54°C (mPa.s) | 608 | 480 | 717 |
| Viscosity drift (%) | 6% | -13% | 24% |
| Delta Viscosity (mPa.s) | 34 | -73 | 141 |
| D50 initial ($\mu$m) | 2.07 | 2.53 | 2.24 |
| D50 2weeks@54°C ($\mu$m) | 2.52 | 2.87 | 2.25 |
| drift D50 (%) | 22% | 13% | 0.1% |
| delta D50 ($\mu$m) | 0.45 | 0.33 | 0.002 |
| D90 initial ($\mu$m) | | | 5.03 |
| D90 2weeks@54°C ($\mu$m) | | | 5.97 |
| Drift D90 (%) | | | 19% |
| Delta D90 ($\mu$m) | | | 0.94 |
| D97 initial ($\mu$m) | 5.942 | 6.90 | |
| D97 2weeks@54°C ($\mu$m) | 6.69 | 8.63 | |
| Drift D97 (%) | 13% | 25% | |
| Delta D97 (%) | 0.75 | 1.73 | |
| Wetsieve 45$\mu$m 2weeks@54°C (%) | 0.02% | 0.04% | 0.00% |

Table 7: Further comparative compositions of a suspension concentrate formulation. All components in Table 7 are in gram / liter.

All comparative compositions in Table 7 contain the same amount of cyclobutrifluram, and contain the same amount of the same antifreeze, antifoam, preservative and thickener as those in composition 26. Furthermore, two of the three comparative compositions in Table 7 contain the same total amount of components (ii), (iii), (iv) and (v) and thus also contain same amount of water as that in composition 26.

| Component | 29 | 30 | 31 |
|---|---|---|---|
| (i) cyclobutrifluram | 450 | 450 | 450 |
| (ii) Sodium-dioctyl-sulfosuccinate | 10 | 20 | 0 |
| (iii) Copolymer Butanol PO (propylene oxide)/EO (ethylene oxide) | 10 | 0 | 20 |

(continued)

All comparative compositions in Table 7 contain the same amount of cyclobutrifluram, and contain the same amount of the same antifreeze, antifoam, preservative and thickener as those in composition 26. Furthermore, two of the three comparative compositions in Table 7 contain the same total amount of components (ii), (iii), (iv) and (v) and thus also contain same amount of water as that in composition 26.

| Component | 29 | 30 | 31 |
|---|---|---|---|
| (iv) Lignosulfonic acid, sodium salt | 0 | 20 | 20 |
| (v) Solution of an acrylic graft copolymer | 30 | 20 | 20 |
| Antifreeze | 50 | 50 | 50 |
| Antifoam | 2 | 2 | 2 |
| Preservative | 3.2 | 3.2 | 3.2 |
| Thickener | 13 | 13 | 13 |
| Water | rest | rest | rest |
| TOTAL | 1 liter | 1 liter | 1 liter |

Table 8: Test results of the compositions in Table 7.

| Test | 29 | 30 | 31 |
|---|---|---|---|
| Viscosity initial (mPa.s) | 548 | 1150 | 436 |
| Viscosity 2weeks@54°C (mPa.s) | 644 | 1480 | 1012 |
| Viscosity drift (%) | 18% | 29% | 132% |
| Delta Viscosity (mPa.s) | 96 | 330 | 576 |
| D50 initial ($\mu$m) | 1.44 | 1.74 | 1.77 |
| D50 2weeks@54°C ($\mu$m) | 2 | 1.82 | 1.94 |
| drift D50 (%) | 39% | 5% | 10% |
| delta D50 ($\mu$m) | 0.56 | 0.08 | 0.17 |
| D90 initial ($\mu$m) | 3.55 | 4.72 | 4.82 |
| D90 2weeks @54°C ($\mu$m) | 5.99 | 4.93 | 5.21 |
| Drift D90 (%) | 69% | 4% | 8% |
| Delta D90 ($\mu$m) | 2.44 | 0.21 | 0.39 |
| Wetsieve 45$\mu$m 2weeks @54°C (%) | 0.01% | 0.01% | 0.01% |
| Observations | particle size growth | initial high viscosity | thickening |

Claims

1. An aqueous suspension concentrate composition comprising

    (i) cyclobutrifluram as active ingredient;
    (ii) 1 to 30 gram / liter of a sulfosuccinate wetting agent;
    (iii) 5 to 50 gram / liter of a butyl polyalkylene oxide block copolymer; and
    (iv) 2.5 to 35 gram / liter of a sodium lignosulfonate.

2. The aqueous suspension concentrate composition according to claim 1, further comprising (v) 1 to 55 gram / liter of an acrylic graft copolymer.

3. The aqueous suspension concentrate composition according to claim 1 or claim 2, wherein the aqueous suspension concentrate composition comprises 100 to 600 gram / liter of cyclobutrifluram.

4. The aqueous suspension concentrate composition according to any one of claims 1 to 3, wherein the aqueous suspension concentrate composition comprises 200 to 500 gram / liter of cyclobutrifluram.

5. The aqueous suspension concentrate composition according to any one of claims 1 to 4, wherein the butyl polyalkylene oxide block copolymer is a butyl alcohol polyoxyethylene-polyoxypropylene block copolymer.

6. The aqueous suspension concentrate composition according to any one of claims 3 to 5, wherein the acrylic graft copolymer comprises a methyacrylic acid backbone.

7. The aqueous suspension concentrate composition according to any one of claims 1 to 6, further comprising from 5 to 120 gram / liter of a pigment.

8. The aqueous suspension concentrate composition according to any one of claims 1 to 7, comprising

   (i) 150 to 550 gram / liter cyclobutrifluram as active ingredient;
   (ii) 5 to 15 gram / liter of a sulfosuccinate wetting agent;
   (iii) 5 to 35 gram / liter of a butyl polyalkylene oxide block copolymer;
   (iv) 5 to 20 gram / liter of a sodium lignosulfonate; and
   (v) 2 to 35 gram / liter of an acrylic graft copolymer.

9. The aqueous suspension concentrate composition according to any one of claims 1 to 8, further comprising one or more additional ingredients selected from an anti-freeze agent, an anti-foam agent, a thickening agent, a biocide (preservative), a buffering agent, and/or a stabilizer.

10. The aqueous suspension concentrate composition according to any one of claims 1 to 9, further comprising one or more adjuvants or carriers.

11. A method of reducing or preventing nematicidal or fungicidal damage in a plant comprising applying a composition according to any one of claims 1 to 10 to the seed of a plant.

12. The method according to claim 11, wherein the plant is selected from barley, brassica head and stem vegetables, bean, carrot, chickpea, corn, cotton, cowpea, curcurbits, dry beans, field peas, garden beans, garlic, lentils, lettuce, millet, oat, onion, peanut, peas, potato, rice, rye, sorghum, soybean, sugarbeet, sunflower, triticale and wheat.

13. A method of reducing or preventing nematicidal or fungicidal damage in a plant comprising applying a composition according to any one of claims 1 to 10 to the plant or to the locus thereof.

14. The method according to claim 13, wherein the plant is selected from arracacha, banana, beans, black pepper, brassica head and stem vegetables, broccoli, cabbage, carrot, cauliflower, celery, Chinese cabbage, citrus fruits, coffee, cotton, cucumber, melon, watermelon, oriental melon, zucchini, dragon fruit, eggplant, fruiting vegetables, garlic, ginger, ginseng, grapes, hot peppers, kale, lettuce, spinach, mustard greens, nuts, okra, onion, oriental raddish, ornamentals, papaya, peanut, peppers, pineapple, pome fruits, potato, soybean, stone fruits, strawberry, sugarbeet, sugarcane, sweet potato, tobacco, tomato, tree nuts and turf.

15. The method according to any one of claims 11 to 14, wherein the composition according to any one of claims 1 to 10 comprises a further pesticidally active ingredient.


**Patentansprüche**

1. Wässrige Suspensionskonzentratzusammensetzung, umfassend

   (i) Cyclobutrifluram als Wirkstoff,
   (ii) 1 bis 30 Gramm / Liter eines Sulfosuccinat-Netzmittels,
   (iii) 5 bis 50 Gramm / Liter eines Butylpolyalkylenoxid-Blockcopolymers und

(iv) 2,5 bis 35 Gramm / Liter eines Natriumlignosulfonats.

2. Wässrige Suspensionskonzentratzusammensetzung nach Anspruch 1, weiterhin umfassend
(v) 1 bis 55 Gramm / Liter eines Acryl-Pfropfcopolymers.

3. Wässrige Suspensionskonzentratzusammensetzung nach Anspruch 1 oder Anspruch 2, wobei die wässrige Suspensionskonzentratzusammensetzung 100 bis 600 Gramm / Liter Cyclobutrifluram umfasst.

4. Wässrige Suspensionskonzentratzusammensetzung nach einem der Ansprüche 1 bis 3, wobei die wässrige Suspensionskonzentratzusammensetzung 200 bis 500 Gramm / Liter Cyclobutrifluram umfasst.

5. Wässrige Suspensionskonzentratzusammensetzung nach einem der Ansprüche 1 bis 4, wobei das Butylpolyalkylenoxid-Blockcopolymer ein Butylalkohol-Polyoxyethylen-Polyoxypropylen-Blockcopolymer ist.

6. Wässrige Suspensionskonzentratzusammensetzung nach einem der Ansprüche 3 bis 5, wobei das Acryl-Pfropfcopolymer ein Methacrylsäure-Grundgerüst umfasst.

7. Wässrige Suspensionskonzentratzusammensetzung nach einem der Ansprüche 1 bis 6, weiterhin umfassend 5 bis 120 Gramm / Liter eines Pigments.

8. Wässrige Suspensionskonzentratzusammensetzung nach einem der Ansprüche 1 bis 7, umfassend

(i) 150 bis 550 Gramm / Liter Cyclobutrifluram als Wirkstoff,
(ii) 5 bis 15 Gramm / Liter eines Sulfosuccinat-Netzmittels,
(iii) 5 bis 35 Gramm / Liter eines Butylpolyalkylenoxid-Blockcopolymers,
(iv) 5 bis 20 Gramm / Liter eines Natriumlignosulfonats und
(v) 2 bis 35 Gramm / Liter eines Acryl-Pfropfcopolymers.

9. Wässrige Suspensionskonzentratzusammensetzung nach einem der Ansprüche 1 bis 8, weiterhin umfassend einen oder mehrere zusätzliche Inhaltsstoffe, ausgewählt aus einem Frostschutzmittel, einem Entschäumungsmittel, einem Verdickungsmittel, einem Biozid (Konservierungsmittel), einem Puffermittel und/oder einem Stabilisator.

10. Wässrige Suspensionskonzentratzusammensetzung nach einem der Ansprüche 1 bis 9, weiterhin umfassend ein oder mehrere Adjuvantien oder Träger.

11. Verfahren zum Reduzieren oder Verhindern nematizider oder fungizider Schäden in einer Pflanze, umfassend das Aufbringen einer Zusammensetzung nach einem der Ansprüche 1 bis 10 auf das Saatgut einer Pflanze.

12. Verfahren nach Anspruch 11, wobei die Pflanze ausgewählt ist aus Gerste, Brassica-Kopf- und Stängelgemüse, Bohne, Karotte, Kichererbse, Mais, Baumwolle, Augenbohne, Kürbisgewächsen, Trockenbohnen, Ackererbsen, Gartenbohnen, Knoblauch, Linsen, Salat, Hirse, Hafer, Zwiebel, Erdnuss, Erbsen, Kartoffel, Reis, Roggen, Sorghum, Sojabohne, Zuckerrübe, Sonnenblume, Triticale und Weizen.

13. Verfahren zum Reduzieren oder Verhindern nematizider oder fungizider Schäden in einer Pflanze, umfassend das Aufbringen einer Zusammensetzung nach einem der Ansprüche 1 bis 10 auf die Pflanze oder deren Standort.

14. Verfahren nach Anspruch 13, wobei die Pflanze ausgewählt ist aus Arakacha, Banane, Bohnen, schwarzem Pfeffer, Brassica-Kopf- und Stängelgemüse, Brokkoli, Kohl, Karotte, Blumenkohl, Sellerie, Chinakohl, Zitrusfrüchten, Kaffee, Baumwolle, Gurke, Melone, Wassermelone, orientalischer Melone, Zucchini, Drachenfrucht, Aubergine, Fruchtgemüse, Knoblauch, Ingwer, Ginseng, Trauben, Pfefferonen, Grünkohl, Salat, Spinat, Senfgemüse, Nüssen, Okra, Zwiebeln, orientalischem Rettich, Zierpflanzen, Papaya, Erdnuss, Paprika, Ananas, Kernobst, Kartoffeln, Sojabohne, Steinfrüchte, Erdbeere, Zuckerrübe, Zuckerrohr, Süßkartoffel, Tabak, Tomate, Baumnüsse und Rasen.

15. Verfahren nach einem der Ansprüche 11 bis 14, wobei die Zusammensetzung nach einem der Ansprüche 1 bis 10 einen weiteren pestiziden Wirkstoff umfasst.

**Revendications**

1.  Composition aqueuse de concentré en suspension, comprenant

    (i) du cyclobutrifluram comme ingrédient actif ;
    (ii) 1 à 30 grammes/litre d'un agent mouillant de type sulfosuccinate ;
    (iii) 5 à 50 grammes/litre d'un copolymère à blocs de butyle poly(oxyde d'alkylène) ; et
    (iv) 2,5 à 35 grammes/litre d'un lignosulfonate de sodium.

2.  Composition aqueuse de concentré en suspension selon la revendication 1, comprenant en outre
    (v) 1 à 55 grammes/litre d'un copolymère greffé acrylique.

3.  Composition aqueuse de concentré en suspension selon la revendication 1 ou la revendication 2, la composition aqueuse de concentré en suspension comprenant 100 à 600 grammes/litre de cyclobutrifluram.

4.  Composition aqueuse de concentré en suspension selon l'une quelconque des revendications 1 à 3, la composition aqueuse de concentré en suspension comprenant 200 à 500 grammes/litre de cyclobutrifluram.

5.  Composition aqueuse de concentré en suspension selon l'une quelconque des revendications 1 à 4, le copolymère à blocs de butyle poly(oxyde d'alkylène) étant un copolymère à blocs d'alcool butyrique polyoxyéthylène-polyoxypropylène.

6.  Composition aqueuse de concentré en suspension selon l'une quelconque des revendications 3 à 5, le copolymère greffé acrylique comprenant un squelette d'acide méthacrylique.

7.  Composition aqueuse de concentré en suspension selon l'une quelconque des revendications 1 à 6, comprenant en outre de 5 à 120 grammes/litre d'un pigment.

8.  Composition aqueuse de concentré en suspension selon l'une quelconque des revendications 1 à 7, comprenant

    (i) 150 à 550 grammes/litre de cyclobutrifluram comme ingrédient actif ;
    (ii) 5 à 15 grammes/litre d'un agent mouillant de type sulfosuccinate ;
    (iii) 5 à 35 grammes/litre d'un copolymère à blocs de butyle poly(oxyde d'alkylène) ;
    (iv) 5 à 20 grammes/litre d'un lignosulfonate de sodium ; et
    (v) 2 à 35 grammes/litre d'un copolymère greffé acrylique.

9.  Composition aqueuse de concentré en suspension selon l'une quelconque des revendications 1 à 8, comprenant en outre un ou plusieurs ingrédients supplémentaires choisis parmi un agent antigel, un agent anti-mousse, un agent épaississant, un biocide (conservateur), un agent tampon et/ou un stabilisant.

10. Composition aqueuse de concentré en suspension selon l'une quelconque des revendications 1 à 9, comprenant en outre un ou plusieurs adjuvants ou supports.

11. Procédé de réduction ou de prévention des dommages nématicides ou fongicides dans un végétal, comprenant l'application d'une composition selon l'une quelconque des revendications 1 à 10 sur la graine d'un végétal.

12. Procédé selon la revendication 11, dans lequel le végétal est choisi parmi l'orge, les légumes à tête et à tige du genre Brassica, les haricots, la carotte, le pois chiche, le maïs, le coton, le niébé, les cucurbitacées, les haricots secs, les pois des champs, les haricots verts, l'ail, les lentilles, la laitue, le millet, l'avoine, l'oignon, l'arachide, les pois, la pomme de terre, le riz, le seigle, le sorgho, le soja, la betterave à sucre, le tournesol, le triticale et le blé.

13. Procédé de réduction ou de prévention des dommages nématicides ou fongicides dans un végétal, comprenant l'application d'une composition selon l'une quelconque des revendications 1 à 10 sur le végétal ou sur le site de celui-ci.

14. Procédé selon la revendication 13, dans lequel le végétal est choisi parmi l'arracacha, la banane, les haricots, le poivre noir, les légumes à tête et à tige du genre Brassica, le brocoli, le chou, la carotte, le chou-fleur, le céleri, le chou chinois, les agrumes, le café, le coton, le concombre, le melon, la pastèque, le melon oriental, la courgette, le fruit du dragon, l'aubergine, les légumes-fruits, l'ail, le gingembre, le ginseng, le raisin, les piments forts, le chou frisé, la laitue, les épinards, les feuilles de moutarde, les noix, le gombo, l'oignon, le radis oriental, les plantes ornementales, la papaye, l'arachide, les poivrons, l'ananas, les fruits à pépins, la pomme de terre, le soja, les fruits à noyau, la fraise, la betterave à sucre, la canne à sucre, la patate douce, le tabac, la tomate, les noix et le gazon.

15. Procédé selon l'une quelconque des revendications 11 à 14, dans lequel la composition selon l'une quelconque des revendications 1 à 10 comprend un autre ingrédient actif sur le plan pesticide.

**REFERENCES CITED IN THE DESCRIPTION**

**Patent documents cited in the description**

- WO 2013143811 A
- WO 2015003951 A